# EUROPEAN PATENT SPECIFICATION

(11) **EP 1 380 601 B1**
(45) Date of publication and mention of the grant of the patent: **25.05.2005**
(21) Application number: 02015565.1
(22) Date of filing: 12.07.2002
(51) Int. Cl.: C08F 10/00

(54) **Supported Ziegler - metallocene catalyst composition and process for olefin polymerization and olefin copolymerization with alpha olefins using novel catalyst systems**
Geträgerter ziegler - metallocene polymerisationskatalysator und dessen benutzung für die polymerisation von olefinen
Catalyseur de polymerisation ziegler - metallocene supporte et polymerisation d'olefines

(43) Date of publication of application: 14.01.2004
(73) Proprietor: Saudi Basic Industries Corporation, Riyadh 11422 (SA)
(72) Inventor: Moman, Akhlaq, 11551 Riyadh (SA); Hamed, Orass, 11551 Riyadh (SA); Abu-Raquabah, Atieh, 11551 Riyadh (SA); Al-Bahily, Khalid, 11551 Riyadh (SA)
(74) Representative: Winkler, Andreas, Dr.

(56) References cited:
- WO-A-98/37108
- US-A- 5 756 613
- US-B1- 6 291 607

## Description

### BACKGROUND OF THE INVENTION

### Field of the Invention

The present invention relates to novel supported polymerization catalyst compositions and a process for polymerization of olefins and copolymerization of olefins with alpha-olefins using that catalyst compositions. The catalyst compositions display high catalyst productivity and excellent polymerization kinetics, and the product polyolefin homopolymers and copolymers have a very low level of fines, uniform spherical particles, high bulk density, very good thermal stability and excellent optical and mechanical properties.

### Description of the Prior Art

Several publications are referenced in this application. These references describe the state of the art to which this invention pertains, and are incorporated herein by reference.

Despite the progress in these areas of Ziegler-Natta and metallocene catalysts, there are still certain limitations as recognized by those of ordinary skill in the art with the prior art development of these catalysts. Traditionally, the active components of both Ziegler-Natta and metallocene catalysts are supported on inert carriers to improve and control the product morphology in olefin polymerization. Magnesium chloride and silica have predominantly been used for the preparation of supported olefin polymerization catalysts.

U.S. patent 3,787,384 discloses a catalyst prepared by first reacting a silica support with a Grignard reagent and then combining the mixture with a tetravalent titanium compound. U.S. patents 5,534,472 and 5,670,439 describe a silica supported vanadium catalyst prepared by the prior contacting of silica with an organomagnesium compound and a trialkylaluminum compound. The silica supported vanadium catalysts are suitable for the production of ethylene-hexene copolymer, though the polymerizations require the use of trichlorofluoromethane or dibromomethane as promoters.

In the case of silica supported metallocene catalysts, catalyst preparation typically requires chemical treatment of the support with the cocatalyst, namely the use of expensive aluminoxane or borane compounds in the catalyst preparation. U.S. patents 5,625,015 and 5,595,950 describe a catalyst system in which silica is contacted with an aluminoxane prior to the deposition of the metallocene component. U.S. patent 5,624,878 describes direct coordination of a Lewis basic silica to B(C₆F₅)₃ in the presence of an amine reagent. In addition to the costs associated with the aluminoxane or borane, this catalyst preparation procedure itself is complicated and expensive.

The procedures typically used for the preparation of suitable magnesium chloride and silica supports such as spray drying or recrystallisation processes are very complicated and expensive. Hence, all methods described in the aforementioned patents of catalyst preparation present the inconvenience of being complicated, expensive and do not allow consistency of particle size and particle size distribution. Also, despite the extensive and increasing use of the described supports for olefin polymerization catalysts, the support materials themselves have several deficiencies. For example, in the case of silica high calcination temperatures are required to remove water, which is a common catalyst poison. This represents a significant proportion of the preparation time of the catalyst. Also, the use of silica or magnesium chloride as a support results in the support remaining largely in the product, which can affect the product properties, such as optical properties, or processing.

It is therefore an object of the present invention to provide catalyst compositions overcoming the difficulties encountered in the prior art.

It is further object of the present invention to provide a process for polymerization of olefins and copolymerization of olefins with alpha-olefins using such a catalyst composition.

### SUMMARY OF THE INVENTION

The first object is achieved by a catalyst composition for polymerization of olefins and copolymerization of olefins with alpha-olefins comprising (a) catalyst precursor comprising at least one Ziegler-Natta compound represented by the general formula TmX₄, TmOX₃, or TmX₃, wherein Tm represents titanium, vanadium or zirconium and X represents a halogen atom, at least one metallocene compound, at least one titanate compound and/or at least one alcohol compound, a magnesium compound wherein the magnesium compound is a Grignard compound represented by the general formula R³MgX wherein R³ is a hydrocarbon group having 1 to 20 carbon atoms and X is a halogen atom, and/or a dialkyl magnesium compound represented represented by the general formula R⁴R⁵Mg wherein R⁴ and R⁵ are each a hydrocarbon group having 1 to 20 carbon atoms, and a polymeric material selected from the group consisting of polyvinylchloride, polyvinylalcohol, polyethylmethacrylate, polymethylmethacrylate, ethylene-vinylalcohol copolymer, and polycarbonate, and (b) a cocatalyst comprising an alkylaluminum compound, aluminoxane compound or mixtures thereof.

The second object is achieved by a process for polymerization of olefins and copolymerization of olefins with alpha-olefins using a catalyst composition according to the present invention.

The catalyst precursor when used in conjunction with the cocatalyst can especially be used to produce linear low, medium and high density polyethylenes and copolymers of ethylene and alpha-olefins with high catalyst productivity and excellent polymerization kinetics. The products having a very low level of fines, uniform spherical particles, high bulk density, very good thermal stability and excellent optical and mechanical properties. The alpha-olefins may be selected from the group of alpha-olefins having 1 to 18 carbon atoms including propene, 1-butene, 1-hexene, 1-octene and 4-methyl-1-pentene and mixtures thereof.

### DETAILED DESCRIPTION OF THE INVENTION

The Ziegler-Natta compound used for the synthesis of the solid catalyst precursor in the present invention is represented by the general formula TmX₄, TmOX₃, TmX₃, wherein Tm represents titanium, vanadium or zirconium and X represents a halogen atom.

Preferable examples of the above mentioned Ziegler-Natta compounds include the following: titanium tetrachloride, titanium trichloride, vanadium tetrachloride, vanadium trichloride, vanadium oxytrichloride or zirconium tetrachloride.

At least one metallocene compound is used for the synthesis of the solid catalyst precursor in the present invention. The metallocene used can be represented by the general formula (Cp)_{z}TmX_{y} wherein Tm represents a transition metal such as titanium, vanadium or zirconium, Cp represents a unsubstituted or substituted cyclopentadienyl ring, X represents a halogen atom, z is 1 or 2, and y is 2 or 3. The cyclopentadienyl ring may be unsubstituted or substituted with a hydrocarbyl radical such as alkyl, alkenyl, aryl containing 1 to 20 carbon atoms; such as methyl, ethyl, n-propyl, isopropyl, n-butyl, isobutyl, amyl, isoamyl, or phenyl.

Preferable examples of the above mentioned metallocene compounds include the following: bis(cyclopentadienyl)titanium dichloride, bis(methylcyclopentadienyl)titanium dichloride, bis(butylcyclopentadienyl)titanium dichloride, bis(pentamethylcyclopentadienyl)titanium dichloride, cyclopentadienyltitanium trichloride, methylcyclopentadienyltitanium trichloride, butylcyclopentadienyltitanium trichloride, pentamethylcyclopentadienyltitanium trichloride, bis(cyclopentadienyl)vanadium dichloride, bis(methylcyclopentadienyl)vanadium dichloride, bis(butylcyclopentadienyl)vanadium dichloride, bis(pentamethylcyclopentadienyl)vanadium dichloride, cyclopentadienylvanadium trichloride, methylcyclopentadienylvanadium trichloride, butylcyclopentadienylvanadium trichloride, pentamethylcyclopentadienylvanadium trichloride, bis(cyclopentadienyl)zirconiun dichloride, bis(methylcyclopentadienyl)zirconium dichloride, bis(butylcyclopentadienyl)zirconium dichloride, bis(pentamethylcyclopentadienyl)zirconium dichloride, cyclopentadienylzirconium trichloride, methylcyclopentadienylzirconium trichloride, butylcyclopentadienylzirconium trichloride and pentamethylcyclopentadienylzirconium trichloride.

The titanate compound used for the synthesis of the solid catalyst precursor in the present invention is represented by the general formula Ti(OR¹)ₙX₄₋ₙ, wherein R¹ represents an alkyl group, aryl group or cycloalkyl group having 1 to 20 carbon atoms, X represents a halogen atom and n represents a number satisfying 0 < n ≤ 4. Non-limiting examples of R¹ include alkyl groups such as methyl, ethyl, n-propyl, isopropyl, n-butyl, or isobutyl.

Preferable examples of the above mentioned titanate compounds include the following; methoxytitanium trichloride, dimethoxytitanium dichloride, tetramethoxytitanium, ethoxytitanium trichloride, diethoxytitanium dichloride, tetraethoxytitanium, propoxytitanium trichloride, dipropoxytitanium dichloride, tripropoxytitanium chloride, tetrapropoxytitanium, butoxytitanium trichloride, dibutoxytitanium dichloride, or tetrabutoxytitanium.

The use of three different transistion metal compounds for the synthesis of the solid catalyst precursor in the present invention, that is the use of the metallocene compound described above, the Ziegler-Natta compound described above and the titanate compound described above was found to signficantly increase catalyst productivity, improve polymerization kinetics, and improve the morphology of the resin; by means of increasing the product resin bulk density and the sphericity of the product resin compared to the prior art. Also with the use of these three transition metal compounds the molecular weight distribution of the product resin was found to be readily regulated and thus in turn improve the processability of the product resin and improve properties of the end product, for example film mechanical properties.

The alcohol compound used for the synthesis of the solid catalyst precursor in the present invention include compounds represented by the general formula R²OH, wherein R² is an alkyl group, aryl group or cycloalkyl group having 1 to 20 carbon atoms. Examples of R² include groups such as methyl, ethyl, n-propyl, isopropyl, n-butyl, isobutyl, cyclohexyl, phenyl, methylphenyl, or ethylphenyl.

Preferable examples of the above mentioned alcohols include methanol, ethanol, n-propanol, isopropanol, n-butanol, isobutanol, cyclohexanol, phenol, methylphenol, ethylphenol and mixtures thereof.

The magnesium compound used for the synthesis of the solid catalyst precursor in the present invention include Grignard compounds represented by the general formula R³MgX, wherein R³ is a hydrocarbon group having 1 to 20 carbon atoms and X is a halogen atom; preferably chlorine. Other preferable magnesium compounds are represented by the general formula R⁴R⁵Mg, wherein R⁴ and R⁵ are each a hydrocarbon group having 1 to 20 carbon atoms.

Preferable examples of the above mentioned magnesium compounds include the following; dialkylmagnesium such as diethylmagnesium, di-n-propylmagnesium, di-isopropylmagnesium, di-n-butylmagnesium, di-isobutylmagnesium, butylethylmagnesium, dihexylmagnesium, dioctylmagnesium, butyloctylmagnesium; alkylmagnesium chloride such as ethylmagnesium chloride, butylmagnesium chloride, hexylmagnesium chloride and mixtures thereof.

The polymer particles used for the synthesis of the solid catalyst precursor in the present invention have a spherical shape with a mean particle diameter of 5 to 1 000 microns and a pore volume of at least 0.05 cm³/g and a pore diameter of 20 to 10 000 angstroms, preferably from 500 to 10 000 angstroms and a surface area of 0.1 to 100 m²/g, preferably from 0.2 to 15 m²/g.

The polymeric supports used in the catalyst preparation of the present invention include polymer particles of polyvinylchloride, polyvinylalcohol, polyethylmethacrylate, polymethylmethacrylate, ethylene-vinylalcohol copolymer, or polycarbonate. Among these polymeric materials polyvinylchloride is more preferable and non-crosslinked polyvinylchloride particles are most preferable. Polyvinylchloride having a molecular weight in the range of about 5 000 to 500 000 g/mole are most preferred.

The polymer particles used in the present invention have surface active sites such as labile chlorine atoms. Preferably, these active sites are reacted stoichiometrically with the organometallic compound, namely a magnesium compound.

The use of the polymer particles mentioned in the present invention, in catalyst preparation offers significant advantages over traditional olefin polymerization catalysts using supports such as silica or magnesium chloride. In comparison to the silica supported catalyst, the polymer particles described in catalyst preparation of the present invention require no high temperature and no prolonged dehydration steps prior to their use in catalyst synthesis, thereby simplifying the synthesis process and thus reducing the overall cost of catalyst preparation. Further the cost of the polymeric support used in the present invention is substantially cheaper than silica or magnesium chloride supports. In addition, the catalyst in the present invention uses significantly lower levels of catalyst components for catalyst preparation than silica or magnesium chloride supported catalysts. Further, unlike in the preparation of silica supported metallocene catalysts, the preparation of the catalyst precursor of the present invention does not require organoaluminum or borane compounds. Also, the catalyst in the present invention is more productive than conventional silica or magnesium chloride supported catalysts for olefin polymerization.

According to one embodiment of the present invention the synthesis of the solid catalyst precursor involves introducing the polymeric material described above into a vessel and then adding a diluent. Suitable diluents include hydrocarbons such as isopentane, hexane, cyclohexane, heptane, isooctane and pentamethylheptane. The polymeric material is then treated with a magnesium compound described above at a temperature in the range of about 10° C to 130° C. The ratio of magnesium compound to the polymer support can be in the range of 0.05 to 20 mmol per gram polymer, preferably 0.1 to 10 mmol per gram polymer. The solvent is then vaporized using a nitrogen purge at a temperature in the range of about 20° C to 100° C.

The resulting free-flowing solid product is then slurried. Suitable solvents for slurrying include isopentane, hexane, cyclohexane, heptane, isooctane and pentamethylheptane. The magnesium modified polymeric material is then treated with a titanate and/or an alcohol compound described above at a temperature in the range of about 10° C to 130° C. According to the present invention tetramethoxytitanium, tetraethoxytitanium, tetrapropoxytitanium, tetrabutoxytitanium are the preferred titanate compounds and methanol, ethanol, n-propanol, isopropanol are the preferred alcohols. The resulting material is then treated with a metallocene compound at a temperature in the range of about 10° C to 130° C. According to the present invention bis(cyclopentadienyl)titanium dichloride, bis(butylcyclopentadienyl)titanium dichloride, cyclopentadienyltitanium trichloride, methylcyclopentadienyltitanium trichloride, butylcyclopentadienyltitanium trichloride, pentamethylcyclopentadienyltitanium trichloride are the preferred metallocene compounds. Then the Ziegler-Natta compound described above is added at a temperature in the range of about 10° C to 130° C. According to the present invention titanium tetrachloride, vanadium tetrachloride or vanadium oxytrichloride are the preferred Ziegler-Natta compounds.

The produced solid catalyst precursor is then washed several times with a suitable solvent such as isopentane, hexane, cyclohexane, heptane, and isooctane. The solid catalyst precursor is then dried using a nitrogen purge at a temperature in the range of 20° C to 100° C.

According to another embodiment of the present invention the synthesis of the solid catalyst precursor involves introducing the polymeric material described above into a vessel and then adding a diluent. Suitable diluents include hydrocarbons such as isopentane, hexane, cyclohexane, heptane, isooctane and pentamethylheptane. The polymeric material is then treated with a magnesium compound described above at a temperature in the range of about 10° C to 130° C. The ratio of magnesium compound to the polymer support can be in the range of 0.05 to 20 mmol per gram polymer, preferably 0.1 to 10 mmol per gram polymer. The magnesium modified polymeric material is then treated with a titanate and/or an alcohol compound described above at a temperature in the range of about 10° C to 130° C. According to the present invention tetramethoxytitanium, tetraethoxytitanium, tetrapropoxytitanium, tetrabutoxytitanium are the preferred titanate compounds and methanol, ethanol, n-propanol, isopropanol are the preferred alcohols. The solvent is then vaporized using a nitrogen purge at a temperature in the range of about 20° C to 100° C.

The resulting free-flowing solid product is then slurried. Suitable solvents for slurrying include isopentane, hexane, cyclohexane, heptane, isooctane and pentamethylheptane. Then the slurry is treated with a titanate and/or an alcohol compound described above at a temperature in the range of about 10° C to 130° C. According to the present invention tetramethoxytitanium, tetraethoxytitanium, tetrapropoxytitanium, tetrabutoxytitanium are the preferred titanate compounds and methanol, ethanol, n-propanol, isopropanol are the preferred alcohols. The resulting material is then treated with a metallocene compound at a temperature in the range of about 10° C to 130° C. According to the present invention bis(cyclopentadienyl)titanium dichloride, bis(butylcyclopentadienyl)titanium dichloride, cyclopentadienyltitanium trichloride, methylcyclopentadienyltitanium trichloride, butylcyclopentadienyltitanium trichloride, pentamethylcyclopentadienyltitanium trichloride are the preferred metallocene compounds. Then the Ziegler-Natta compound described above is added at a temperature in the range of about 10° C to 130° C. According to the present invention titanium tetrachloride, vanadium tetrachloride or vanadium oxytrichloride are the preferred Ziegler-Natta compounds.

The produced solid catalyst precursor is then washed several times with a suitable solvent such as isopentane, hexane, cyclohexane, heptane, and isooctane. The solid catalyst precursor is then dried using a nitrogen purge at a temperature in the range of 20° C to 100° C.

According to another embodiment of the present invention the synthesis of the solid catalyst precursor involves introducing the polymeric material described above into a vessel and then adding a diluent. Suitable diluents include hydrocarbons such as isopentane, hexane, cyclohexane, heptane, isooctane and pentamethylheptane. The polymeric material is then treated with a magnesium compound described above at a temperature in the range of about 10° C to 130° C. The ratio of magnesium compound to the polymer support can be in the range of 0.05 to 20 mmol per gram polymer, preferably 0.1 to 10 mmol per gram polymer. The solvent is then vaporized using a nitrogen purge at a temperature in the range of about 20° C to 100° C.

The resulting free-flowing solid product is then slurried. Suitable solvents for slurrying include isopentane, hexane, cyclohexane, heptane, isooctane and pentamethylheptane. The magnesium modified polymeric material is then treated with a titanate and/or an alcohol compound described above at a temperature in the range of about 10° C to 130° C. According to the present invention tetramethoxytitanium, tetraethoxytitanium, tetrapropoxytitanium, tetrabutoxytitanium are the preferred titanate compounds and methanol, ethanol, n-propanol, isopropanol are the preferred alcohols. The resulting material is then treated with a Ziegler-Natta compound described above at a temperature in the range of about 10° C to 130° C. According to the present invention titanium tetrachloride, vanadium tetrachloride or vanadium oxytrichloride are the preferred Ziegler-Natta compounds. Then the metallocene compound described above is added at a temperature in the range of about 10° C to 130° C. According to the present invention bis(cyclopentadienyl)titanium dichloride, cyclopentadienyltitanium trichloride, methylcyclopentadienyltitanium trichloride, butylcyclopentadienyltitanium trichloride, pentamethylcyclopentadienyltitanium trichloride are the preferred metallocene compounds.

The produced solid catalyst precursor is then washed several times with a suitable solvent such as isopentane, hexane, cyclohexane, heptane, and isooctane. The solid catalyst precursor is then dried using a nitrogen purge at a temperature in the range of 20° C to 100° C.

In the present invention the order of addition of the individual catalyst components in the preparation of the catalyst precursor can be readily interchanged and was found to be a very convienent means of controlling product resin properties. Further, the catalyst compositions of the present invention are not subjected to halogenation treatments, for example chlorination treatments. The thus-formed catalyst precursor of the present invention is suitably activated by aluminum compounds, also known as cocatalysts. The activation process can be one step in which the catalyst is fully activated in the reactor, or two steps, in which the catalyst is partially activated outside the reactor and the complete activation occurs inside the reactor.

Unlike catalyst compositions described in the prior art the catalyst compositions of the present invention do not require promoters such as chloroform, trichlorofluoromethane or dibromomethane during polymerization.

The aluminum compounds used as cocatalysts used in the present invention are alkylaluminum compounds represented by the general formula R⁶ₙAlX₃₋ₙ, wherein R⁶ represents a hydrocarbon group having 1 to 10 carbon atoms; X represents a halogen and n represents a number satisfying 0 < n ≤3. Illustrative but not limiting examples include trialkylaluminums such as trimethylaluminum, triethylaluminum, tri-isobutylaluminum, tri-n-hexylaluminum; dialkylaluminum chloride such as dimethylaluminum chloride, diethylaluminum chloride. The preferred activators of the above general formula are trimethylaluminum, triethylaluminum, tri-isobutylaluminum and tri-n-hexylaluminum. Examples of other suitable aluminum compounds in the present invention are aluminoxane compounds represented by the general formula R⁷R⁸Al-O-AlR⁹R¹⁰, wherein R⁷, R⁸, R⁹ and R¹⁰ are either the same or different linear, branched or cyclic alkyl groups having 1 to 12 carbon atoms; such as methyl, ethyl, propyl or isobutyl. The preferred examples of aluminoxane compounds are methylaluminoxane and modified methylaluminoxane (MMAO). Further, mixtures of alkylaluminum compounds and aluminoxane compounds described above can also be conveniently used in the present invention.

The cocatalyst in the present invention can be used in an amount of 10 to 10 000 in terms moles of aluminum in the cocatalyst to moles of transition metal in the catalyst precursor, and preferably 20 to 7 000.

The catalyst system described in the present invention can operate in polymerizing alpha-olefins in slurry, solution and gas phase processes. Gas phase polymerization can be carried out in stirred bed reactors and in fluidized bed reactors. Suitable ethylene partial pressures are in the range of about 3 to 40 bar, more preferably 15 to 30 bar and suitable polymerization temperatures are in the range of about 30 °C to 110 °C, preferably 50 °C to 95 °C. In addition to polyethylene homopolymer, ethylene copolymers with alpha-olefins having 3 to 18 carbon atoms are readily prepared by the present invention. Particular examples include ethylene/propene, ethylene/1-butene, ethylene/1-hexene, ethylene/1-heptene, ethylene/1-octene, ethylene/4-methyl 1-pentene. Linear low, medium and high density polyethylenes and copolymers of ethylene and alpha-olefins are readily obtained by the catalyst and process of the present invention.

Hydrogen can be very conveniently used during polymerization using the catalyst compositions described in the present invention to regulate the molecular weight of the polymer product. The weight average molecular weight of the polymers produced by the process of the present invention are in the range of about 500 to 1 000 000 g/mole or higher, preferably from about 10 000 to 750 000 g/mole; depending on the amount of hydrogen used, the polymerization temperature and the polymer density attained. The homopolymers and copolymers of the present invention have a melt index range of more than 0 and up to 100, preferably between 0.3 to 50. The polymers of such wide range of melt index are capable of being used in film and molding applications.

The catalysts described in the present invention display high catalyst productivity and excellent polymerization kinetics during the polymerization process. Further, the polymers produced by the process of the present invention are uniform and spherical particles containing a very low level of fines, having, high bulk density, posses very good thermal stability and excellent optical and mechanical properties.

### EXAMPLES

The following examples are intended to be illustrative of this invention. They are, of course, not to be taken in any way limiting on the scope of this invention. Numerous changes and modifications can be made with respect to the invention.

### EXAMPLE 1

### Synthesis of Catalyst A

To a three-necked round bottom flask, equipped with a condenser and a magnetic stirrer, was placed 10.0 g of polyvinylchloride spheres with an average particle size of 36 microns. The flask containing the polyvinylchloride was heated up to 70° C using an oil bath and then evacuated at 30 mm Hg pressure for 30 minutes. The flask and its contents were then purged with dried nitrogen and the polyvinylchloride was slurried using 30 cm³ of isopentane. Then 1.5 cm³ of butylmagnesium chloride (Aldrich, 2.0 molar in diethylether) was added to the slurry and the resultant mixture was stirred for 60 minutes at an oil bath temperature of 35° C, under reflux conditions. The isopentane was then evaporated to obtain a free-flowing powder by using a nitrogen purge at 35° C.

Then the magnesium-modified polyvinylchloride was slurried using 30 cm³ of isopentane and 2 cm³ of tetraethoxytitanium (Alfa Aesar, 1.0 molar in hexane) was added to the slurry and the resulting mixture was stirred at 35° C for 40 minutes. Then a CpTiCl₃ solution (0.1 g in 15 cm³ toluene) was added to the contents of the flask, and the resulting mixture was stirred at 35° C for 20 minutes. Then 6 cm³ of titanium tetrachloride (Aldrich, 1.0 molar in hexane) was added to the contents of the flask and the resulting mixture was stirred at 35° C for 20 minutes. The supernatant liquid was decanted and the resulting solid product was washed by stirring with 80 cm³ of isopentane and then removing the isopentane, then washed again twice with 80 cm³ of isopentane in each wash. Finally, the solid catalyst was dried using a nitrogen purge at 35° C to yield a free-flowing brown colored solid product. The solid catalyst precursor was analyzed by inductively coupled plasma analysis and was found to contain 0.68% by weight magnesium and 1.93% by weight titanium.

### EXAMPLE 2

### Ethylene Polymerization

An autoclave with a volume of 3 liters was purged with nitrogen at 130° C for 30 minutes. After cooling the autoclave to 85° C the reactor was purged with hydrogen and then 1.5 liters of n-hexane were introduced to the reactor. The reactor was then pressurized to 3 barg hydrogen pressure. Then 2.0 cm³ of triethylaluminum, TEAL (Aldrich, 1.0 molar in hexane) was injected into the reactor. Ethylene was introduced to the reactor such as to raise the reactor pressure to 15 barg. This was followed by injection of 0.1 g of the solid catalyst "A" described in Example 1 after being slurried in 20 cm³ of n-hexane solvent. Polymerization was carried out for 1 hour; with ethylene supplied on demand to maintain the total reactor pressure at 15 barg. 510 grams of polyethylene were recovered with a resin bulk density of 0.303 g/cm³ and a catalyst productivity of 5 100 gPE/g catalyst. Gel permeation chromatography analysis of the product resin revealed a weight average molecular weight of 120 000 g/mole, a number average molecular weight of 32 350 and a molecular weight distribution of 3.71.

### COMPARATIVE EXAMPLE 1

### Synthesis of Catalyst CA

To a three-necked round bottom flask, equipped with a condenser and a magnetic stirrer, was placed 10.0 g of polyvinylchloride spheres with an average particle size of 36 microns. The flask containing the polyvinylchloride was heated up to 70° C using an oil bath and then evacuated at 30 mm Hg pressure for 30 minutes. The flask and its contents were then purged with dried nitrogen and the polyvinylchloride was slurried using 30 cm³ of isopentane. Then 1.5 cm³ of butylmagnesium chloride (Aldrich, 2.0 molar in diethylether) was added to the slurry and the resultant mixture was stirred for 60 minutes at an oil bath temperature of 35° C, under reflux conditions. The isopentane was then evaporated to obtain a free-flowing powder by using a nitrogen purge at 35° C.

Then the magnesium-modified polyvinylchloride was slurried using 30 cm³ of isopentane and a CpTiCl₃ solution (0.1 g in 15 cm³ toluene) was added to the contents of the flask, and the resulting mixture was stirred at 35° C for 20 minutes. Then 6 cm³ of titanium tetrachloride (Aldrich, 1.0 molar in hexane) was added to the contents of the flask and the resulting mixture was stirred at 35° C for 20 minutes. The supernatant liquid was decanted and the resulting solid product was washed by stirring with 80 cm³ of isopentane and then removing the isopentane, then washed again twice with 80 cm³ of isopentane in each wash. Finally, the solid catalyst was dried using a nitrogen purge at 35° C to yield a free-flowing brown colored solid product. The solid catalyst precursor was analyzed by inductively coupled plasma analysis and was found to contain 0.60% by weight magnesium and 0.82% by weight titanium.

### COMPARATIVE EXAMPLE 2

### Ethylene Polymerization

An autoclave with a volume of 3 liters was purged with nitrogen at 130° C for 30 minutes. After cooling the autoclave to 85° C the reactor was purged with hydrogen and then 1.5 liters of n-hexane were introduced to the reactor. The reactor was then pressurized to 3 barg hydrogen pressure. Then 2.0 cm³ of triethylaluminum, TEAL (Aldrich, 1.0 molar in hexane) was injected into the reactor. Ethylene was introduced to the reactor such as to raise the reactor pressure to 15 barg. This was followed by injection of 0.1 g of the solid catalyst "CA" described in Comparative Example 1 after being slurried in 20 cm³ of n-hexane solvent. Polymerization was carried out for 1 hour; with ethylene supplied on demand to maintain the total reactor pressure at 15 barg. 350 grams of polyethylene were recovered with a resin bulk density of 0.250 g/cm³ and a catalyst productivity of 3 500 gPE/g catalyst. Gel permeation chromatography analysis of the product resin revealed a weight average molecular weight of 132 000 g/mole, a number average molecular weight of 30 350 and a molecular weight distribution of 4.35.

### EXAMPLE 3

### Ethylene Polymerization

An autoclave with a volume of 3 liters was purged with nitrogen at 130° C for 30 minutes. After cooling the autoclave to 85° C the reactor was purged with hydrogen and then 1.5 liters of n-hexane were introduced to the reactor. The reactor was then pressurized to 3 barg hydrogen pressure. Then a mixture of 1.0 cm³ of modified methylaluminoxane, MMAO solution (Akzo-Nobel, 7wt % Al in heptane) and 1.0 cm³ of triethylaluminum, TEAL (Aldrich, 1.0 molar in hexane) was injected into the reactor. Ethylene was introduced to the reactor such as to raise the reactor pressure to 15 barg. This was followed by injection of 0.05 g of the solid catalyst "A" described in Example 1 after being slurried in 20 cm³ of n-hexane solvent. Polymerization was carried out for 1 hour; with ethylene supplied on demand to maintain the total reactor pressure at 15 barg. 400 grams of polyethylene were recovered with a resin bulk density of 0.310 g/cm³ and a catalyst productivity of 8 000 gPE/g catalyst. Gel permeation chromatography analysis of the product resin revealed a weight average molecular weight of 128 500 g/mole, a number average molecular weight of 32 650 and a molecular weight distribution of 3.94.

### EXAMPLE 4

### Ethylene Polymerization

An autoclave with a volume of 3 liters was purged with nitrogen at 130° C for 30 minutes. After cooling the autoclave to 85° C the reactor was purged with hydrogen and then 1.5 liters of n-hexane were introduced to the reactor. The reactor was then pressurized to 3 barg hydrogen pressure. Then a mixture of 1.0 cm³ of modified methylaluminoxane, MMAO solution (Akzo-Nobel, 7wt % Al in heptane) and 2.0 cm³ of triisobutylaluminum, TIBAL (Aldrich, 1.0 molar in hexane) was injected into the reactor. Ethylene was introduced to the reactor such as to raise the reactor pressure to 15 barg. This was followed by injection of 0.05 g of the solid catalyst "A" described in Example 1 after being slurried in 20 cm³ of n-hexane solvent. Polymerization was carried out for 1 hour; with ethylene supplied on demand to maintain the total reactor pressure at 15 barg. 325 grams of polyethylene were recovered with a resin bulk density of 0.290 g/cm³ and a catalyst productivity of 6 500 gPE/g catalyst. Gel permeation chromatography analysis of the product resin revealed a weight average molecular weight of 167 500 g/mole, a number average molecular weight of 44 850 and a molecular weight distribution of 3.73.

### EXAMPLE 5

### Synthesis of Catalyst B

To a three-necked round bottom flask, equipped with a condenser and a magnetic stirrer, was placed 10.0 g of polyvinylchloride spheres with an average particle size of 36 microns. The flask containing the polyvinylchloride was heated up to 70° C using an oil bath and then evacuated at 30 mm Hg pressure for 30 minutes. The flask and its contents were then purged with dried nitrogen and the polyvinylchloride was slurried using 30 cm³ of isopentane. Then 1.5 cm³ of butylmagnesium chloride (Aldrich, 2.0 molar in diethylether) was added to the slurry and the resultant mixture was stirred for 60 minutes at an oil bath temperature of 35° C, under reflux conditions. The isopentane was then evaporated to obtain a free-flowing powder by using a nitrogen purge at 35° C.

Then the magnesium-modified polyvinylchloride was slurried using 30 cm³ of isopentane and 2 cm³ of tetraethoxytitanium (Alfa Aesar, 1.0 molar in hexane) was added to the slurry and the resulting mixture was stirred at 35° C for 40 minutes. Then a CpTiCl₃ solution (0.1 g in 15 cm³ toluene) was added to the contents of the flask, and the resulting mixture was stirred at 35° C for 20 minutes. Then 8 cm³ of vanadium tetrachloride (Aldrich, 1.0 molar in hexane) was added to the contents of the flask and the resulting mixture was stirred at 35° C for 20 minutes. The supernatant liquid was decanted and the resulting solid product was washed by stirring with 80 cm³ of isopentane and then removing the isopentane, then washed again twice with 80 cm³ of isopentane in each wash. Finally, the solid catalyst was dried using a nitrogen purge at 35° C to yield a free-flowing brown colored solid product. The solid catalyst precursor was analyzed by inductively coupled plasma analysis and was found to contain 0.62% by weight magnesium, 0.58% by weight titanium and 1.90% by weight vanadium.

### EXAMPLE 6

### Ethylene Polymerization

An autoclave with a volume of 3 liters was purged with nitrogen at 130° C for 30 minutes. After cooling the autoclave to 85° C the reactor was purged with hydrogen and then 1.5 liters of n-hexane were introduced to the reactor. The reactor was then pressurized to 3 barg hydrogen pressure. Then a mixture of 1.0 cm³ of modified methylaluminoxane, MMAO solution (Akzo-Nobel, 7wt % Al in heptane) and 1.0 cm³ of triethylaluminum, TEAL (Aldrich, 1.0 molar in hexane) was injected into the reactor. Ethylene was introduced to the reactor such as to raise the reactor pressure to 15 barg. This was followed by injection of 0.05 g of the solid catalyst "B" described in Example 5 after being slurried in 20 cm³ of n-hexane solvent. Polymerization was carried out for 1 hour; with ethylene supplied on demand to maintain the total reactor pressure at 15 barg. 265 grams of polyethylene were recovered with a resin bulk density of 0.250 g/cm³ and a catalyst productivity of 5 300 gPE/g catalyst. Gel permeation chromatography analysis of the product resin revealed a weight average molecular weight of 139 500 g/mole, a number average molecular weight of 27 750 and a molecular weight distribution of 5.03.

### EXAMPLE 7

### Synthesis of Catalyst C

To a three-necked round bottom flask, equipped with a condenser and a magnetic stirrer, was placed 10.0 g of polyvinylchloride spheres with an average particle size of 36 microns. The flask containing the polyvinylchloride was heated up to 70° C using an oil bath and then evacuated at 30 mm Hg pressure for 30 minutes. The flask and its contents were then purged with dried nitrogen and the polyvinylchloride was slurried using 30 cm³ of isopentane. Then 2.0 cm³ of butylmagnesium chloride (Aldrich, 2.0 molar in diethylether) was added to the slurry and the resultant mixture was stirred for 60 minutes at an oil bath temperature of 35° C, under reflux conditions. Then 0.125 cm³ of ethanol (Alfa Aesar, 1.0 molar in hexane) was added to the slurry and the resulting mixture was stirred at 35° C for 20 minutes. The isopentane was then evaporated to obtain a free-flowing powder by using a nitrogen purge at 35° C.

Then the modified polyvinylchloride was slurried using 30 cm³ of isopentane and 0.25 cm³ of of tetraethoxytitanium (Alfa Aesar, 1.0 molar in hexane) was added to the slurry and the resulting mixture was stirred at 35° C for 40 minutes. Then a CpTiCl₃ solution (0.1 g in 15 cm³ toluene) was added to the contents of the flask, and the resulting mixture was stirred at 35° C for 20 minutes. Then 6 cm³ of titanium tetrachloride (Aldrich, 1.0 molar in hexane) was added to the contents of the flask and the resulting mixture was stirred at 35° C for 20 minutes. The supernatant liquid was decanted and the resulting solid product was washed by stirring with 80 cm³ of isopentane and then removing the isopentane, then washed again twice with 80 cm³ of isopentane in each wash. Finally, the solid catalyst was dried using a nitrogen purge at 35° C to yield a free-flowing brown colored solid product. The solid catalyst precursor was analyzed by inductively coupled plasma analysis and was found to contain 0.81% by weight magnesium and 1.24% by weight titanium.

### EXAMPLE 8

### Ethylene Polymerization

An autoclave with a volume of 3 liters was purged with nitrogen at 130° C for 30 minutes. After cooling the autoclave to 85° C the reactor was purged with hydrogen and then 1.5 liters of n-hexane were introduced to the reactor. The reactor was then pressurized to 3 barg hydrogen pressure. Then a mixture of 1.0 cm³ of modified methylaluminoxane, MMAO solution (Akzo-Nobel, 7wt % Al in heptane) and 1.0 cm³ of triethylaluminum, TEAL (Aldrich, 1.0 molar in hexane) was injected into the reactor. Ethylene was introduced to the reactor such as to raise the reactor pressure to 15 barg. This was followed by injection of 0.05 g of the solid catalyst "C" described in Example 7 after being slurried in 20 cm³ of n-hexane solvent. Polymerization was carried out for 1 hour; with ethylene supplied on demand to maintain the total reactor pressure at 15 barg. 252 grams of polyethylene were recovered with a resin bulk density of 0.260 g/cm³ and a catalyst productivity of 5 040 gPE/g catalyst. Gel permeation chromatography analysis of the product resin revealed a weight average molecular weight of 177 500 g/mole, a number average molecular weight of 42 300 and a molecular weight distribution of 4.20.

### EXAMPLE 9

### Synthesis of Catalyst D

To a three-necked round bottom flask, equipped with a condenser and a magnetic stirrer, was placed 10.0 g of polyvinylchloride spheres with an average particle size of 36 microns. The flask containing the polyvinylchloride was heated up to 70° C using an oil bath and then evacuated at 30 mm Hg pressure for 30 minutes. The flask and its contents were then purged with dried nitrogen and the polyvinylchloride was slurried using 30 cm³ of isopentane. Then 1.5 cm³ of butylmagnesium chloride (Aldrich, 2.0 molar in diethylether) was added to the slurry and the resultant mixture was stirred for 60 minutes at an oil bath temperature of 35° C, under reflux conditions. The isopentane was then evaporated to obtain a free-flowing powder by using a nitrogen purge at 35° C.

Then the magnesium-modified polyvinylchloride was slurried using 30 cm³ of isopentane and 2 cm³ of tetraethoxytitanium (Alfa Aesar, 1.0 molar in hexane) was added to the slurry and the resulting mixture was stirred at 35° C for 40 minutes. Then a CpTiCl₃ solution (0.05 g in 15 cm³ toluene) was added to the contents of the flask, and the resulting mixture was stirred at 35° C for 20 minutes. Then 6 cm³ of titanium tetrachloride (Aldrich, 1.0 molar in hexane) was added to the contents of the flask and the resulting mixture was stirred at 35° C for 20 minutes. The supernatant liquid was decanted and the resulting solid product was washed by stirring with 80 cm³ of isopentane and then removing the isopentane, then washed again twice with 80 cm³ of isopentane in each wash. Finally, the solid catalyst was dried using a nitrogen purge at 35° C to yield a free-flowing brown colored solid product. The solid catalyst precursor was analyzed by inductively coupled plasma analysis and was found to contain 0.72% by weight magnesium and 1.89% by weight titanium.

### EXAMPLE 10

### Ethylene Polymerization

An autoclave with a volume of 3 liters was purged with nitrogen at 130° C for 30 minutes. After cooling the autoclave to 85° C the reactor was purged with hydrogen and then 1.5 liters of n-hexane were introduced to the reactor. The reactor was then pressurized to 3 barg hydrogen pressure. Then a mixture of 1.0 cm³ of modified methylaluminoxane, MMAO solution (Akzo-Nobel, 7wt % Al in heptane) and 1.0 cm³ of triethylaluminum, TEAL (Aldrich, 1.0 molar in hexane) was injected into the reactor. Ethylene was introduced to the reactor such as to raise the reactor pressure to 15 barg. This was followed by injection of 0.05 g of the solid catalyst "D" described in Example 9 after being slurried in 20 cm³ of n-hexane solvent. Polymerization was carried out for 1 hour; with ethylene supplied on demand to maintain the total reactor pressure at 15 barg. 375 grams of polyethylene were recovered with a resin bulk density of 0.310 g/cm³ and a catalyst productivity of 7 500 gPE/g catalyst. Gel permeation chromatography analysis of the product resin revealed a weight average molecular weight of 137 500 g/mole, a number average molecular weight of 38 150 and a molecular weight distribution of 3.60.

### EXAMPLE 11

### Synthesis of Catalyst E

To a three-necked round bottom flask, equipped with a condenser and a magnetic stirrer, was placed 10.0 g of polyvinylchloride spheres with an average particle size of 36 microns. The flask containing the polyvinylchloride was heated up to 70° C using an oil bath and then evacuated at 30 mm Hg pressure for 30 minutes. The flask and its contents were then purged with dried nitrogen and the polyvinylchloride was slurried using 30 cm³ of isopentane. Then 1.5 cm³ of butylmagnesium chloride (Aldrich, 2.0 molar in diethylether) was added to the slurry and the resultant mixture was stirred for 60 minutes at an oil bath temperature of 35° C, under reflux conditions. The isopentane was then evaporated to obtain a free-flowing powder by using a nitrogen purge at 35° C.

Then the magnesium-modified polyvinylchloride was slurried using 30 cm³ of isopentane and 2 cm³ of tetraethoxytitanium (Alfa Aesar, 1.0 molar in hexane) was added to the slurry and the resulting mixture was stirred at 35° C for 40 minutes. Then a CpTiCl₃ solution (0.05 g in 15 cm³ toluene) was added to the contents of the flask, and the resulting mixture was stirred at 35° C for 20 minutes. Then 2 cm³ of titanium tetrachloride (Aldrich, 1.0 molar in hexane) was added to contents of the flask and the resulting mixture was stirred at 35° C for 20 minutes. The supernatant liquid was decanted and the resulting solid product was washed by stirring with 80 cm³ of isopentane and then removing the isopentane, then washed again twice with 80 cm³ of isopentane in each wash. Finally, the solid catalyst was dried using a nitrogen purge at 35° C to yield a free-flowing brown colored solid product. The solid catalyst precursor was analyzed by inductively coupled plasma analysis and was found to contain 0.76% by weight magnesium and 1.76% by weight titanium.

### EXAMPLE 12

### Ethylene Polymerization

An autoclave with a volume of 3 liters was purged with nitrogen at 130° C for 30 minutes. After cooling the autoclave to 85° C the reactor was purged with hydrogen and then 1.5 liters of n-hexane were introduced to the reactor. The reactor was then pressurized to 3 barg hydrogen pressure. Then a mixture of 1.0 cm³ of modified methylaluminoxane, MMAO solution (Akzo-Nobel, 7wt % Al in heptane) and 1.0 cm³ of triethylaluminum, TEAL (Aldrich, 1.0 molar in hexane) was injected into the reactor. Ethylene was introduced to the reactor such as to raise the reactor pressure to 15 barg. This was followed by injection of 0.05 g of the solid catalyst "E" described in Example 11 after being slurried in 20 cm³ of n-hexane solvent. Polymerization was carried out for 1 hour; with ethylene supplied on demand to maintain the total reactor pressure at 15 barg. 336 grams of polyethylene were recovered with a resin bulk density of 0.274 g/cm³ and a catalyst productivity of 6 720 gPE/g catalyst. Gel permeation chromatography analysis of the product resin revealed a weight average molecular weight of 151 000 g/mole, a number average molecular weight of 58 750 and a molecular weight distribution of 2.57.

### EXAMPLE 13

### Synthesis of Catalyst F

To a three-necked round bottom flask, equipped with a condenser and a magnetic stirrer, was placed 10.0 g of polyvinylchloride spheres with an average particle size of 36 microns. The flask containing the polyvinylchloride was heated up to 70° C using an oil bath and then evacuated at 30 mm Hg pressure for 30 minutes. The flask and its contents were then purged with dried nitrogen and the polyvinylchloride was slurried using 30 cm³ of isopentane. Then 1.5 cm³ of butylmagnesium chloride (Aldrich, 2.0 molar in diethylether) was added to the slurry and the resultant mixture was stirred for 60 minutes at an oil bath temperature of 35° C, under reflux conditions. The isopentane was then evaporated to obtain a free-flowing powder by using a nitrogen purge at 35° C.

Then the magnesium-modified polyvinylchloride was slurried using 30 cm³ of isopentane and 2 cm³ of tetraethoxytitanium (Alfa Aesar, 1.0 molar in hexane) was added to the slurry and the resulting mixture was stirred at 35° C for 40 minutes. Then 2 cm³ of titanium tetrachloride (Aldrich, 1.0 molar in hexane) was added to contents of the flask and the resulting mixture was stirred at 35° C for 20 minutes. Then a CpTiCl₃ solution (0.05 g in 15 cm³ toluene) was added to the contents of the flask, and the resulting mixture was stirred at 35° C for 20 minutes. The supernatant liquid was decanted and the resulting solid product was washed by stirring with 80 cm³ of isopentane and then removing the isopentane, then washed again twice with 80 cm³ of isopentane in each wash. Finally, the solid catalyst was dried using a nitrogen purge at 35° C to yield a free-flowing brown colored solid product. The solid catalyst precursor was analyzed by inductively coupled plasma analysis and was found to contain 0.65% by weight magnesium and 1.61% by weight titanium.

### EXAMPLE 14

### Ethylene Polymerization

An autoclave with a volume of 3 liters was purged with nitrogen at 130° C for 30 minutes. After cooling the autoclave to 85° C the reactor was purged with hydrogen and then 1.5 liters of n-hexane were introduced to the reactor. The reactor was then pressurized to 3 barg hydrogen pressure. Then a mixture of 1.0 cm³ of modified methylaluminoxane, MMAO solution (Akzo-Nobel, 7wt % Al in heptane) and 1.0 cm³ of triethylaluminum, TEAL (Aldrich, 1.0 molar in hexane) was injected into the reactor. Ethylene was introduced to the reactor such as to raise the reactor pressure to 15 barg. This was followed by injection of 0.05 g of the solid catalyst "F" described in Example 13 after being slurried in 20 cm³ of n-hexane solvent. Polymerization was carried out for 1 hour; with ethylene supplied on demand to maintain the total reactor pressure at 15 barg. 290 grams of polyethylene were recovered with a resin bulk density of 0.290 g/cm³ and a catalyst productivity of 5 800 gPE/g catalyst. Gel permeation chromatography analysis of the product resin revealed a weight average molecular weight of 187 000 g/mole, a number average molecular weight of 54 700 and a molecular weight distribution of 3.42.

### EXAMPLE 15

### Synthesis of Catalyst G

To a three-necked round bottom flask, equipped with a condenser and a magnetic stirrer, was placed 10.0 g of polyvinylchloride spheres with an average particle size of 36 microns. The flask containing the polyvinylchloride was heated up to 70° C using an oil bath and then evacuated at 30 mm Hg pressure for 30 minutes. The flask and its contents were then purged with dried nitrogen and the polyvinylchloride was slurried using 30 cm³ of isopentane. Then 2.0 cm³ of butylmagnesium chloride (Aldrich, 2.0 molar in diethylether) was added to the slurry and the resultant mixture was stirred for 60 minutes at an oil bath temperature of 35° C, under reflux conditions. The isopentane was then evaporated to obtain a free-flowing powder by using a nitrogen purge at 35° C.

Then the magnesium-modified polyvinylchloride was slurried using 30 cm³ of isopentane and 0.5 cm³ of tetraethoxytitanium (Alfa Aesar, 1.0 molar in hexane) was added to the slurry and the resulting mixture was stirred at 35° C for 40 minutes. Then a CpTiCl₃ solution (0.05 g in 15 cm³ toluene) was added to the contents of the flask, and the resulting mixture was stirred at 35° C for 20 minutes. Then 6 cm³ of titanium tetrachloride (Aldrich, 1.0 molar in hexane) was added to the contents of the flask and the resulting mixture was stirred at 35° C for 20 minutes. The supernatant liquid was decanted and the resulting solid product was washed by stirring with 80 cm³ of isopentane and then removing the isopentane, then washed again twice with 80 cm³ of isopentane in each wash. Finally, the solid catalyst was dried using a nitrogen purge at 35° C to yield a free-flowing brown colored solid product. The solid catalyst precursor was analyzed by inductively coupled plasma analysis and was found to contain 0.82% by weight magnesium and 2.12% by weight titanium.

### EXAMPLE 16

### Ethylene Polymerization

An autoclave with a volume of 3 liters was purged with nitrogen at 130° C for 30 minutes. After cooling the autoclave to 85° C the reactor was purged with hydrogen and then 1.5 liters of n-hexane were introduced to the reactor. The reactor was then pressurized to 3 barg hydrogen pressure. Then a mixture of 1.0 cm³ of modified methylaluminoxane, MMAO solution (Akzo-Nobel, 7wt % Al in heptane) and 1.0 cm³ of triethylaluminum, TEAL (Aldrich, 1.0 molar in hexane) was injected into the reactor. Ethylene was introduced to the reactor such as to raise the reactor pressure to 15 barg. This was followed by injection of 0.05 g of the solid catalyst "G" described in Example 15 after being slurried in 20 cm³ of n-hexane solvent. Polymerization was carried out for 1 hour; with ethylene supplied on demand to maintain the total reactor pressure at 15 barg. 450 grams of polyethylene were recovered with a resin bulk density of 0.324 g/cm³ and a catalyst productivity of 9 000 gPE/g catalyst. Gel permeation chromatography analysis of the product resin revealed a weight average molecular weight of 142 500 g/mole, a number average molecular weight of 46 500 and a molecular weight distribution of 3.06.

The features disclosed in the foregoing description and in the claims may, both separately and in any combination thereof, be material for realizing the invention in diverse forms thereof.

## Claims

1. A catalyst composition for polymerization of olefins and copolymerization of olefins with alpha-olefins comprising (a) catalyst precursor comprising at least one Ziegler-Natta compound represented by the general formula TmX₄, TmOX₃, or TmX₃, wherein Tm represents titanium, vanadium or zirconium and X represents a halogen atom, at least one metallocene compound, at least one titanate compound and/or at least one alcohol compound, a magnesium compound wherein the magnesium compound is a Grignard compound represented by the general formula R³MgX wherein R³ is a hydrocarbon group having 1 to 20 carbon atoms and X is a halogen atom, and/or a dialkyl magnesium compound represented by the general formula R⁴R⁵Mg wherein R⁴ and R⁵ are each a hydrocarbon group having 1 to 20 carbon atoms, and a polymeric material selected from the group consisting of polyvinylchloride, polyvinylalcohol polyethylmethacrylate, polymethylmethacrylate, ethylene-vinylalcohol copolymer, and polycarbonate, and (b) a cocatalyst comprising an alkylaluminum compound, aluminoxane compound or mixtures thereof.

2. The catalyst composition according to claim 1 wherein the alpha-olefin is selected from the group of alpha-olefins having 1 to 18 carbon atoms including propene, 1-butene, 1-hexene, 1-octene and 4-methyl 1-pentene and mixtures thereof.

3. The catalyst composition according to claim 1 or 2 wherein the Ziegler-Natta compound is titanium tetrachloride, titanium trichloride, vanadium tetrachloride, vanadium trichloride, vanadium oxytrichloride or zirconium tetrachloride.

4. The catalyst composition according to any of the preceding claims wherein the metallocene compound is represented by the general formula (Cp)_{z}TmX_{y} wherein Tm represents a transition metal such as titanium, vanadium or zirconium, Cp represents a unsubstituted or substituted cyclopentadienyl ring, X represents a halogen atom, z is 1 or 2, and y is 2 or 3.

5. The catalyst composition according to claim 4 wherein the cyclopentadienyl ring may be unsubstituted or substituted with a hydrocarbyl radical such as alkyl, alkenyl, aryl containing 1 to 20 carbon atoms; such as methyl, ethyl, n-propyl, isopropyl, n-butyl, isobutyl, amyl, isoamyl or phenyl.

6. The catalyst composition according to claim 4 or 5 wherein the metallocene compound is bis(cyclopentadienyl)titanium dichloride, bis(methylcyclopentadienyl)titanium dichloride, bis(butylcyclopentadienyl)titanium dichloride, bis(pentamethylcyclopentadienyl)titanium dichloride, cyclopentadienyltitanium trichloride, methylcyclopentadienyltitanium trichloride, butylcyclopentadienyltitanium trichloride, pentamethylcyclopentadienyltitanium trichloride, bis(cyclopentadienyl)vanadium dichloride, bis(methylcyclopentadienyl)vanadium dichloride, bis(butylcyclopentadienyl)vanadium dichloride, bis(pentamethylcyclopentadienyl)vanadium dichloride, cyclopentadienylvanadium trichloride, methylcyclopentadienylvanadium trichloride, butylcyclopentadienylvanadium trichloride, pentamethylcyclopentadienylvanadium trichloride, bis(cyclopentadienyl)zirconium dichloride, bis(methylcyclopentadienyl)zirconium dichloride, bis(butylcyclopentadienyl)zirconium dichloride, bis(pentamethylcyclopentadienyl)zirconium dichloride, cyclopentadienylzirconium trichloride, methylcyclopentadienylzirconium trichloride, butylcyclopentadienylzirconium trichloride or pentamethylcyclopentadienylzirconium trichloride.

7. The catalyst composition according to claim 6 wherein the metallocene compound is bis(cyclopentadienyl)titanium dichloride, bis(methylcyclopentadienyl)titanium dichloride, bis(butylcyclopentadienyl)titanium dichloride, bis(pentamethylcyclopentadienyl)titanium dichloride, cyclopentadienyltitanium trichloride, methylcyclopentadienyltitanium trichloride, butylcyclopentadienyltitanium trichloride, or pentamethylcyclopentadienyltitanium trichloride.

8. The catalyst composition according to any of the preceding claims wherein the titanate compound is represented by the general formula Ti(OR¹)ₙX₄₋ₙ, wherein R¹ represents an alkyl group, aryl group or cycloalkyl group having 1 to 20 carbon atoms, X represents a halogen atom, n represents a number satisfying 0 < n ≤ 4 and R¹ includes alkyl groups such as methyl, ethyl, n-propyl, isopropyl, n-butyl or isobutyl.

9. The catalyst composition according to claim 8 wherein the titanate compound is methoxytitanium trichloride, dimethoxytitanium dichloride, tetramethoxytitanium, ethoxytitanium trichloride, diethoxytitanium dichloride, tetraethoxytitanium, propoxytitanium trichloride, dipropoxytitanium dichloride, tripropoxytitanium chloride, tetrapropoxytitanium, butoxytitanium trichloride, dibutoxytitanium dichloride or tetrabutoxytitanium.

10. The catalyst composition according to claim 9 wherein the titanate compound is tetraethoxytitanium, tetrapropoxytitanium, or tetrabutoxytitanium.

11. The catalyst composition according to any of the preceding claims wherein the alcohol is represented by the general formula R²OH, wherein R² is an alkyl group, aryl group or cycloalkyl group having 1 to 20 carbon atoms.

12. The catalyst composition according to claim 11 wherein the alcohol is methanol, ethanol, n-propanol, isopropanol, n-butanol, isobutanol, cyclohexanol, phenol, methylphenol, ethylphenol and mixtures thereof.

13. The catalyst composition according to any of the preceding claims wherein the magnesium compound is diethylmagnesium, di-n-propylmagnesium, di-isopropylmagnesium, di-n-butylmagnesium, di-isobutylmagnesium, butylethylmagnesium, dihexylmagnesium, dioctylmagnesium, butyloctylmagnesium, ethylmagnesium chloride, butylmagnesium chloride, hexylmagnesium chloride or mixtures thereof.

14. The catalyst composition according to any of the preceding claims wherein the polymeric material is in the form of particles having a mean particle diameter of 5 to 1 000 microns and a pore volume of at least 0.05 cm³/g and a pore diameter of 20 to 10 000 angstroms and a surface area of 0.1 to 100 m²/g.

15. The catalyst composition according to claim 14 wherein the pore diameter is from 500 to 10 000 angstroms and the surface area is from 0.2 to 15 m²/g.

16. The catalyst composition according to any of the preceding claims wherein the polymeric material is polyvinylchloride.

17. The catalyst composition according to claim 16 wherein the polyvinylchloride has a molecular weight in the range of 5 000 to 500 000 g/mole.

18. The catalyst composition according to any of the preceding claims wherein the magnesium compound is present in the range of 0.05 to 20 mmol per gram polymeric material.

19. The catalyst composition to any of the preceding claims wherein the alkylaluminum compound is represented by the general formula R⁶ₙAlX₃₋ₙ, wherein R⁶ represents a hydrocarbon group having 1 to 10 carbon atoms; X represents a halogen and n represents a number satisfying 0 < n ≤3.

20. The catalyst composition according to claim 19 wherein the alkylaluminum compound is trimethylaluminum, triethylaluminum, tri-isobutylaluminum or tri-n-hexylaluminum.

21. The catalyst composition according to any of the preceding claims wherein the aluminoxane compound is represented by the general formula R⁷R⁸Al-O-AlR⁹R¹⁰ wherein R⁷, R⁸, R⁹ and R¹⁰ are either the same or different linear, branched or cyclic alkyl group having 1 to 12 carbons; such as methyl, ethyl, propyl or isobutyl.

22. The catalyst composition according to claim 21 wherein the aluminoxane is methylaluminoxane or modified methylaluminoxane (MMAO).

23. The catalyst composition according to any of the preceding claims wherein the cocatalyst is used in an amount of 10 to 10 000 in terms moles of aluminum in the cocatalyst to moles of transition metal in the catalyst precursor.

24. A process for polymerization of olefins and copolymerization of olefins with alpha-olefins using a catalyst compostion according to any of the preceding claims 1 to 23.

25. The process according to claim 24 wherein the polymerization is performed in gas phase, slurry phase or solution phase.

26. The process according to claim 24 or 25 wherein the polymer product of polymerization has a weight average molecular weight of 500 to 1000 000 g/mole.

## Patentansprüche

1. Katalysatorzusammensetzung zur Polymerisation von Olefinen und Copolymerisation von Olefinen mit alpha-Olefinen, umfassend (a) eine Katalysatorvorstufe, umfassend wenigstens eine Ziegler-Natta-Verbindung, dargestellt durch die allgemeine Formel TmX₄, TmOX₃ oder TmX₃, wobei Tm Titan, Vanadium oder Zirkonium darstellt und X ein Halogenatom darstellt, wenigstens eine Metallocenverbindung, wenigstens eine Titanatverbindung und/oder wenigstens eine Alkoholverbindung, eine Magnesiumverbindung, wobei die Magnesiumverbindung eine Grignardverbindung, dargestellt durch die allgemeine Formel R³MgX, wobei R³ eine Kohlenwasserstoffgruppe mit 1 bis 20 Kohlenstoffatomen und X ein Halogenatom ist, und/oder eine Dialkylmagnesiumverbindung, dargestellt durch die allgemeine Formel R⁴R⁵Mg, wobei R⁴ und R⁵ jeweils eine Kohlenwasserstoffgruppe mit 1 bis 20 Kohlenstoffatomen ist, ist, und ein polymeres Material, ausgewählt aus der Gruppe bestehend aus Polyvinylchlorid, Polyvinylalkohol, Polyethylmethacrylat, Polymethylmethacrylat, Ethylen-Vinylalkohol-Copolymer und Polycarbonat, und (b) einen Cokatalysator, der eine Alkylaluminiumverbindung, Aluminoxanverbindung oder Mischungen derselben umfaßt.

2. Katalysatorzusammensetzung nach Anspruch 1, **dadurch gekennzeichnet, daß** das alpha-Olefin ausgewählt ist aus der Gruppe von alpha-Olefinen mit 1 bis 18 Kohlenstoffatomen, einschließend Propen, 1-Buten, 1-Hexen, 1-Octen und 4-Methyl-1-penten und Mischungen derselben.

3. Katalysatorzusammensetzung nach Anspruch 1 oder 2, **dadurch gekennzeichnet, daß** die Ziegler-Natta-Verbindung Titantetrachlorid, Titantrichlorid, Vanadiumtetrachlorid, Vanadiumtrichlorid, Vanadiumoxytrichlorid oder Zirkoniumtetrachlorid ist.

4. Katalysatorzusammensetzung nach einem der vorangehenden Ansprüche, **dadurch gekennzeichnet, daß** die Metallocenverbindung dargestellt ist durch die allgemeine Formel (Cp)_{z}TmX_{y}, wobei Tm ein Übergangsmetall, wie Titan, Vanadium oder Zirkonium darstellt, Cp einen nicht substituierten oder substituierten Cyclopentadienylring darstellt, X ein Halogenatom darstellt, z 1 oder 2 ist und y 2 oder 3 ist.

5. Katalysatorzusammensetzung nach Anspruch 4, **dadurch gekennzeichnet, daß** der Cyclopentadienylring nicht substituiert ist oder mit einem Kohlenwasserstoffrest, wie Alkyl, Alkenyl, Aryl, enthaltend 1 bis 20 Kohlenstoffatome; wie Methyl, Ethyl, n-Propyl, Isopropyl, n-Butyl, Isobutyl, Amyl, Isoamyl oder Phenyl, substituiert ist.

6. Katalysatorzusammensetzung nach Anspruch 4 oder 5, **dadurch gekennzeichnet, daß** die Metallocenverbindung Bis(cyclopentadienyl)titandichlorid, Bis(methylcyclopentadienyl)titandichlorid, Bis(butylcyclopentadienyl)titandichlorid, Bis(pentamethylcyclopentadienyl)titandichlorid, Cyclopentadienyltitantrichlorid, Methylcyclopentadienyltitantrichlorid, Butylcyclopentadienyltitantrichlorid, Pentamethylcyclopentadienyltitantrichlorid, Bis(cyclopentadienyl)vanadiumdichlorid, Bis(methylcyclopentadienyl)vanadiumdichlorid, Bis(butylcyclopentadienyl)vanadiumdichlorid, Bis(pentamethylcyclopentadienyl)vanadiumdichlorid, Cyclopentadienylvanadiumtrichlorid, Methylcyclopentadienylvanadiumtrichlorid, Butylcyclopentadienylvanadiumtrichlorid, Pentamethylcyclopentadienylvanadiumtrichlorid, Bis(cyclopentadienyl)zirkoniumdichlorid, Bis(methylcyclopentadienyl)zirkoniumdichlorid, Bis(butylcyclopentadienyl)zirkoniumdichlorid, Bis(pentamethylcyclopentadienyl)zirkoniumdichlorid, Cyclopentadienylzirkoniumtrichlorid, Methylcyclopentadienylzirkoniumtrichlorid, Butycyclopentadienylzirkoniumtrichlorid oder Pentamethylcyclopentadienylzirkoniumtrichlorid ist.

7. Katalysatorzusammensetzung nach Anspruch 6, **dadurch gekennzeichnet, daß** die Metallocenverbindung Bis(cyclopentadienyl)titandichlorid, Bis(methylcyclopentadienyl)titandichlorid, Bis(butylcyclopentadienyl)titandichlorid, Bis(pentamethylcyclopentadienyl)titandichlorid, Cyclopentadienyltitantrichlorid, Methylcyclopentadienyltitantrichlorid, Butylcyclopentadienyltitantrichlorid oder Pentamethylcyclopentadienyltitantrichlorid ist.

8. Katalysatorzusammensetzung nach einem der vorangehenden Ansprüche, **dadurch gekennzeichnet, daß** die Titanatverbindung dargestellt ist durch die allgemeine Formel Ti(OR¹)ₙX₄₋ₙ, wobei R¹ eine Alkylgruppe, Arylgruppe oder Cycloalkylgruppe mit 1 bis 20 Kohlenstoffatomen darstellt, X ein Halogenatom darstellt, n eine Zahl darstellt, die 0 < n ≤ 4 erfüllt, und R¹ Alkylgruppen einschließt, wie Methyl, Ethyl, n-Propyl, Isopropyl, n-Butyl oder Isobutyl.

9. Katalysatorzusammensetzung nach Anspruch 8, **dadurch gekennzeichnet, daß** die Titanatverbindung Methoxytitantrichlorid, Dimethoxytitandichlorid, Tetramethoxytitan, Ethoxytitantrichlorid, Diethoxytitandichlorid, Tetraethoxytitan, Propoxytitantrichlorid, Dipropoxytitandichlorid, Tripropoxytitanchlorid, Tetrapropoxytitan, Butoxytitantrichlorid, Dibutoxytitandichlorid oder Tetrabutoxytitan ist.

10. Katalysatorzusammensetzung nach Anspruch 9, **dadurch gekennzeichnet, daß** die Titanatverbindung Tetraethoxytitan, Tetrapropoxytitan oder Tetrabutoxytitan ist.

11. Katalysatorzusammensetzung nach einem der vorangehenden Ansprüche, **dadurch gekennzeichnet, daß** der Alkohol dargestellt ist durch die allgemeine Formel R²OH, wobei R² eine Alkylgruppe , Arylgruppe oder Cycloalkylgruppe mit 1 bis 20 Kohlenstoffatomen ist.

12. Katalysatorzusammensetzung nach Anspruch 11, **dadurch gekennzeichnet, daß** der Alkohol Methanol, Ethanol, n-Propanol, Isopropanol, n-Butanol, Isobutanol, Cyclohexanol, Phenol, Methylphenol, Ethylphenol und Mischungen derselben ist.

13. Katalysatorzusammensetzung nach einem der vorangehenden Ansprüche, **dadurch gekennzeichnet, daß** die Magnesiumverbindung Diethylmagnesium, Di-n-Propylmagnesium, Di-iso-Propylmagnesium, Di-n-Butylmagnesium, Di-Isobutylmagnesium, Butylethylmagnesium, Dihexylmagnesium, Dioctylmagnesium, Butyloctylmagnesium, Ethylmagnesiumchlorid, Butylmagnesiumchlorid, Hexylmagnesiumchlorid oder Mischungen derselben ist.

14. Katalysatorzusammensetzung nach einem der vorangehenden Ansprüche, **dadurch gekennzeichnet, daß** das polymere Material in der Form von Partikel mit einem mittleren Partikeldurchmesser von 5 bis 1.000 µm und einem Porenvolumen von wenigstens 0,05 cm³/g und einem Porendurchmesser von 20 bis 10.000 Angström und einem Oberflächenbereich von 0,1 bis 100 m²/g ist.

15. Katalysatorzusammensetzung nach Anspruch 14, **dadurch gekennzeichnet, daß** der Porendurchmesser von 500 bis 10.000 Angström und der Oberflächenbereich von 0,2 bis 15 m²/g ist.

16. Katalysatorzusammensetzung nach einem der vorangehenden Ansprüche, **dadurch gekennzeichnet, daß** das polymere Material Polyvinylchlorid ist.

17. Katalysatorzusammensetzung nach Anspruch 16, **dadurch gekennzeichnet, daß** das Polyvinylchlorid ein Molekulargewicht in dem Bereich von 5.000 bis 500.000 g/mol aufweist.

18. Katalysatorzusammensetzung nach einem der vorangehenden Ansprüche, **dadurch gekennzeichnet, daß** die Magnesiumverbindung in dem Bereich von 0,05 bis 20 mmol pro Gramm polymerem Material vorliegt.

19. Katalysatorzusammensetzung nach einem der vorangehenden Ansprüche, **dadurch gekennzeichnet, daß** die Alkylaluminiumverbindung dargestellt ist durch die allgemeine Formel R⁶ₙAlX₃₋ₙ, wobei R⁶ eine Kohlenwasserstoffgruppe mit 1 bis 10 Kohlenstoffatomen darstellt; X ein Halogen darstellt und n eine Zahl darstellt, die 0 < n ≤ 3 erfüllt.

20. Katalysatorzusammensetzung nach Anspruch 19, **dadurch gekennzeichnet, daß** die Alkylaluminiumverbindung Trimethylaluminium, Triethylaluminium, Tri-Isobutylaluminium oder Tri-n-Hexylaluminium ist.

21. Katalysatorzusammensetzung nach einem der vorangehenden Ansprüche, **dadurch gekennzeichnet, daß** die Aluminoxanverbindung dargestellt ist durch die allgemeine Formel R⁷R⁸Al-O-AlR⁹R¹⁰, wobei R⁷, R⁸, R⁹, und R¹⁰ entweder die gleiche oder unterschiedliche lineare, verzweigte oder cyclische Alkylgruppe mit 1 bis 12 Kohlenstoffatomen ist; wie Methyl, Ethyl, Propyl oder Isobutyl.

22. Katalysatorzusammensetzung nach Anspruch 21, **dadurch gekennzeichnet, daß** das Aluminoxan Methylaluminoxan oder modifiziertes Methylaluminoxan (MMAO) ist.

23. Katalysatorzusammensetzung nach einem der vorangehenden Ansprüche, **dadurch gekennzeichnet, daß** der Cokatalysator in einer Menge von 10 bis 10.000 Mol Aluminium in dem Cokatalysator in bezug auf Mol Übergangsmetall in der Katalysatorvorstufe verwendet wird.

24. Verfahren zur Polymerisation von Olefinen und Copolymerisation von Olefinen mit alpha-Olefinen unter Verwendung einer Katalysatorzusammensetzung nach einem der vorangehenden Ansprüche 1 bis 23.

25. Verfahren nach Anspruch 24, **dadurch gekennzeichnet, daß** die Polymerisation in Gasphase, Slurry-Phase oder Lösungsphase durchgeführt wird.

26. Verfahren nach Anspruch 24 oder 25, **dadurch gekennzeichnet, daß** das Polymerprodukt der Polymerisation ein Molekulargewichtsgewichtsmittel von 500 bis 1.000.000 g/mol aufweist.

## Revendications

1. Composition catalytique pour la polymérisation d'oléfines et la copolymérisation d'oléfines avec des alpha-oléfines, comprenant (a) un précurseur catalytique comprenant un composé Ziegler-Natt représenté par la formule générale TmX₄, TmOX₃ ou TmX₃, dans laquelle Tm représente le titane, le vanadium ou le zirconium et X représente un atome d'halogène, au moins un composé métallocène, au moins un composé de titanate et/ou au moins un composé alcoolique, un composé de magnésium dans lequel le composé de magnésium est un composé de Grignard représenté par la formule générale R³MgX, dans laquelle R³ est un groupe hydrocarbure ayant de 1 à 20 atomes de carbone et X est un atome d'halogène, et/ou un composé dialkylmagnésium représenté par la formule générale R⁴R⁵Mg, dans laquelle R⁴ et R⁵ sont chacun un groupe hydrocarbure ayant de 1 à 20 atomes de carbone, et un matériau polymère choisi dans le groupe constitué du chlorure de polyvinyle, d'un alcool polyvinylique, du méthacrylate de polyéthyle, du méthacrylate de polyméthyle, d'un copolymère d'éthylène-alcool vinylique, et d'un polycarbonate, et (b) un co-catalyseur comprenant un composé dialkylammonium, un composé aluminoxane ou des mélanges de ceux-ci.

2. Composition catalytique selon la revendication 1, dans laquelle l'alpha-oléfine est choisie dans le groupe des alpha-oléfines ayant de 1 à 18 atomes de carbone comprenant le propène, le 1-butène, le 1-hexène, le 1-octène et le 4-méthyl-1-pentène et des mélanges de ceux-ci.

3. Composition catalytique selon la revendication 1 ou 2, dans laquelle le composé de Ziegler-Natta est le tétrachlorure de titane, le trichlorure de titane, le tétrachlorure de vanadium, le trichlorure de vanadium, l'oxytrichlorure de vanadium ou le tétrachlorure de zirconium.

4. Composition catalytique selon l'une quelconque des revendications précédentes, dans laquelle le composé métallocène est représenté par la formule générale (Cp)_{z}TmX_{y}, dans laquelle Tm représente un métal de transition tel que le titane, le vanadium ou le zirconium, Cp représente un cycle cyclopentadiényle non substitué ou substitué, X représente un atome d'halogène, z est 1 ou 2, et y est 2 ou 3.

5. Composition catalytique selon la revendication 4, dans laquelle le cycle cyclopentadiényle peut être non substitué ou substitué par un radical hydrocarbyle tel que le radical alkyle, alcényle ou aryle contenant de 1 à 20 atomes de carbone ; tel que le radical méthyle, éthyle, n-propyle, isopropyle, n-butyle, isobutyle, amyle, isoamyle ou phényle.

6. Composition catalytique selon la revendication 4 ou 5, dans laquelle le composé métallocène est le dichlorure de bis(cyclopentadiényl)titane, le dichlorure de bis(méthylcyclopentadiényl)titane, le dichlorure de bis(butylcyclopentadiényl)titane, le dichlorure de bis(pentaméthylcyclopentadiényl)titane, le trichlorure de cyclopentadiényltitane, le trichlorure de méthylcyclopentadiényltitane, le trichlorure de butylcyclopentadiényltitane, le trichlorure de pentaméthylcyclopentadiényltitane, le dichlorure de bis(cyclopentadiényl)vanadium, le dichlorure de bis(méthylcyclopentadiényl)-vanadium, le dichlorure de bis(butylcyclopentadiényl)-vanadium, le dichlorure de bis(pentaméthylcyclopentadiényl)-vanadium, le trichlorure de cyclopentadiénylvanadium, le trichlorure de méthylcyclopentadiénylvanadium, le trichlorure de butylcyclopentadiénylvanadium, le trichlorure de pentaméthylcyclopentadiénylvanadium, le dichlorure de bis(cyclopentadiényl)zirconium, le dichlorure de bis(méthylcyclopentadiényl)zirconium, le dichlorure de bis(butylcyclopentadiényl)zirconium, le dichlorure de bis(pentaméthylcyclopentadiényl)zirconium, le trichlorure de cyclopentadiénylzirconium, le trichlorure de méthylcyclopentadiénylzirconium, le trichlorure de butylcyclopentadiénylzirconium ou le trichlorure de pentaméthyl-cyclopentadiénylzirconium.

7. Composition catalytique selon la revendication 6, dans laquelle le composé métallocène est le dichlorure de bis(cyclopentadiényl)titane, le dichlorure de bis(méthylcyclopentadiényl)titane, le dichlorure de bis(butylcyclopentadiényl)titane, le dichlorure de bis(pentaméthylcyclopentadiényl)titane, le trichlorure de cyclopentadiényltitane, le trichlorure de méthylcyclopentadiényltitane, le trichlorure de butylcyclopentadiényltitane ou le trichlorure de pentaméthylcyclopentadiényltitane.

8. Composition catalytique selon l'une quelconque des revendications précédentes, dans laquelle le composé de titanate est représenté par la formule générale Ti(OR¹)ₙX₄₋ₙ, dans laquelle R¹ représente un groupe alkyle, un groupe aryle ou un groupe cycloalkyle ayant de 1 à 20 atomes de carbone, X représente un atome d'halogène, n représente un nombre satisfaisant 0 < n ≤ 4 et R¹ comprend les groupes alkyles tels que le groupe méthyle, éthyle, n-propyle, isopropyle, n-butyle ou isobutyle.

9. Composition catalytique selon la revendication 8, dans laquelle le composé de titanate est le trichlorure de méthoxytitane, le dichlorure de diméthoxytitane, le tétraméthoxytitane, le trichloure d'éthoxytitane, le dichlorure de diéthoxytitane, le tétraéthoxytitane, le trichloure de propoxytitane, le dichlorure de dipropoxytitane, le chlorure de tripropoxytitane, le tétrapropoxytitane, le trichlorure de butoxytitane, le dichlorure de dibutoxytitane ou le tétrabutoxytitane.

10. Composition catalytique selon la revendication 9, dans laquelle le composé de titanate est le tétraéthoxytitane, le tétrapropoxytitane ou le tétrabutoxytitane.

11. Composition catalytique selon l'une quelconque des revendications précédentes, dans laquelle l'alcool est représenté par la formule générale R²OH, dans laquelle R² est un groupe alkyle, un groupe aryle ou un groupe cycloalkyle ayant de 1 à 20 atomes de carbone.

12. Composition catalytique selon la revendication 11, dans laquelle l'alcool est le méthanol, l'éthanol, le n-propanol, l'isopropanol, le n-butanol, l'isobutanol, le cyclohexanol, le phénol, le méthylphénol, l'éthylphénol et des mélanges de ceux-ci.

13. Composition catalytique selon l'une quelconque des revendications précédentes, dans laquelle le composé de magnésium est le diéthylmagnésium, le di-n-propylmagnésium, le diisopropylmagnésium, le di-n-butylmagnésium, le diisobutylmagnésium, le butyléthylmagnésium, le dihexylmagnésium, le dioctylmagnésium, le butyloctylmagnésium, le chlorure d'éthylmagnésium, le chlorure de butylmagnésium, le chlorure d'hexylmagnésium ou des mélanges de ceux-ci.

14. Composition catalytique selon l'une quelconque des revendications précédentes, dans laquelle le matériau polymère est sous la forme de particules ayant un diamètre moyen de particules de 5 à 1000 microns et un volume de pore d'au moins 0,05 cm³/g et un diamètre de pore de 20 à 10000 Angstrom et une surface de 0,1 à 100 m²/g.

15. Composition catalytique selon la revendication 14, dans laquelle le diamètre de pore est de 500 à 10000 Angstrom et la surface est de 0,2 à 15 m²/g.

16. Composition catalytique selon l'une quelconque des revendications précédentes, dans laquelle le matériau polymère est le chlorure de polyvinyle.

17. Composition catalytique selon la revendication 16, dans laquelle le chlorure de polyvinyle a un poids moléculaire compris dans la gamme allant de 5000 à 500000 g/mole.

18. Composition catalytique selon l'une quelconque des revendications précédentes, dans laquelle le composé de magnésium est présent dans la gamme allant de 0,005 à 20 mmole par gramme de matériau polymère.

19. Composition catalytique selon l'une quelconque des revendications précédentes, dans laquelle le composé alkylaluminium est représenté par la formule générale R⁶ₙAlX₃₋ₙ, dans laquelle R⁶ représente un groupe hydrocarbure ayant de 1 à 10 atomes de carbone ; X représente un atome d'halogène et n représente un nombre satisfaisant 0 < n ≤ 3.

20. Composition catalytique selon la revendication 19, dans laquelle le composé alkylaluminium est le triméthylaluminium, le triéthylaluminium, le tri-isobutylaluminium ou le tri-hexylaluminium.

21. Composition catalytique selon l'une quelconque des revendications précédentes, dans laquelle le composé aluminoxane est représenté par la formule générale R⁷R⁸Al-O-AlR⁹R¹⁰, dans laquelle R⁷, R⁸, R⁹ et R¹⁰ sont des groupes alkyles linéaire, ramifiés ou cycliques, identiques ou différents, ayant de 1 à 12 atomes de carbone ; tels que le groupe méthyle, éthyle, propyle ou isobutyle.

22. Composition catalytique selon la revendication 21, dans laquelle l'aluminoxane est le méthylaluminoxane ou le méthylaluminoxane modifié (MMAO).

23. Composition catalytique selon l'une quelconque des revendications précédentes, dans laquelle le co-catalyseur est utilisé en une quantité de 10 à 10000 en termes de moles d'aluminium dans le co-catalyseur aux moles de métal de transition dans le précurseur catalytique.

24. Procédé de polymérisation d'oléfines et de copolymérisation d'oléfines avec des alpha-oléfines en utilisant une composition catalytique selon l'une quelconque des revendications précédentes 1 à 23.

25. Procédé selon la revendication 24, dans lequel la polymérisation est réalisée en phase gazeuse, en suspension ou en solution.

26. Procédé selon la revendication 24 ou 25, dans lequel le produit polymère de polymérisation a un poids moléculaire moyen en poids de 500 à 1000000 g/mole.
